Europäisches Patentamt

European Patent Office

Office européen des brevets

(19)

(11) Publication number: **0 035 851**
A2

(12) **EUROPEAN PATENT APPLICATION**

(21) Application number: **81300819.0**

(22) Date of filing: **27.02.81**

(51) Int. Cl.³: **F 16 L 59/16**

(30) Priority: **27.02.80 GB 8006602**

(43) Date of publication of application:
**16.09.81 Bulletin 81/37**

(84) Designated Contracting States:
**AT BE CH DE FR IT LI NL SE**

(71) Applicant: **RAYCHEM LIMITED**
**ROLLS HOUSE 7, Rolls Buildings Fetter Lane**
**London, EC4 1NL(GB)**

(72) Inventor: **Goetze, Klaus Peter**
**Ave de Touterelles 29**
**B-1150 Brussels(BE)**

(72) Inventor: **Peigneur, Paul**
**Prins Albertlaan**
**B-3800 Sint-Truiden(BE)**

(72) Inventor: **Barker, David John**
**104 Marines Drive**
**Faringdon Oxfordshire(GB)**

(72) Inventor: **Corke, Nicholas Thomas**
**4, Youghal Close**
**Shrivenham Wiltshire(GB)**

(74) Representative: **Dlugosz, Anthony Charles et al,**
**Raychem Limited Patent Department Faraday Road**
**Dorcan**
**Swindon SN3 5HH Wiltshire(GB)**

(54) **Pipe seal especially for use with insulated pipes, and pipe containing such a seal.**

(57) A seal for preventing ingress or escape of fluid through a portion of a pipe (1) comprises a cover (10) which is preferably dimensionally-recoverable and is coated on at least part of one surface thereof with a layer of sealant which will adhere to the pipe and which, when subjected to a strain in a peel mode applied between the cover (10) and pipe (1) sufficient to cause the adhesive bond so formed to fail, will fail cohesively at a temperature below -10°, preferably below -15°C and especially below -20°C.

The seal is especially suitable for use on insulated pipes which are often used at low ambient temperatures, for example district heating pipes.

Fig.1.

EP 0 035 851 A2

COMPLETE DOCUMENT

Croydon Printing Company Ltd.

This invention relates to pipes and seals for pipes that are intended to be exposed to low ambient temperatures.

According to one aspect, the invention provides a seal for preventing or reducing ingress or escape of fluid through a portion of a pipe, for example a join between two sections of a pipe, which comprises a cover adapted to be positioned about the said portion of the pipe, at least part of one surface of the cover being provided with a layer of sealant which will adhere to the pipe and which, when subjected to a strain in a peel mode applied between the cover and the pipe sufficient to cause the adhesive bond so formed to fail, will fail cohesively at a temperature below -10°C, preferably below -15°C and especially below -20°C.

When determining whether or not the adhesive bond fails cohesively, it is important that the pipe surface has been cleaned and degreased thoroughly, for example as described below.

The pipe may in general be any form of pipe that carries fluids, for example gas or oil pipes or water carrying pipes. Thermally insulated pipes are of particular importance since the insulation of the pipe may be damaged either physically (in the sense that the thermal conduction thereof is increased) or chemically, by contact with water or water vapour. Such pipes, for example district heating pipes, usually comprise an inner metal pipe for carrying the fluid, e.g. hot or super-heated water or steam, hereinafter called the inner pipe, a layer of insulation that is usually in the form of a fibrous or foamed material such as glass
fibre, mineral wool e.g. rockwool, or polyurethane foam, and
a surface layer formed from a metallic or plastics material,
usually a plastics material for example polyethylene. The
insulation of these pipes may be seriously damaged on
contact with water because absorption of water will increase
the thermal conductivity of the insulation or in the case of
polyurethane foam, because the water will corrode the
insulation, or by both methods. Moreover, the deleterious
effects of absorption of water are not confined to localised
regions of the pipe since the water may travel along the
fibrous or foamed insulation by capilliary action, and,
since the insulation supports the inner pipe, in severe
cases sufficient insulation may be corroded to allow the
inner pipe to sag and touch the surface layer.

Advantageously the thermally insulated pipe is provided with
means for preventing or detecting penetration of water along
the insulation of the pipe and a cover as defined above
positioned about a portion of the pipe.

The means for detecting penetration of water along the
insulation, may, for example, comprise a number of cells
for measuring the electrical conductivity of the insulation,
located along the pipe so that ingress of water is detected
by an increase in electrical conductivity or it may comprise
an arrangement described in U.K. Patent Application No.
2051294A. However, the pipe is preferably provided with means for preventing penetration of water along the pipe insulation, for example, at least one barrier positioned between two lengths of insulation of the pipe so that it extends radially from the inner pipe to the external surface of the insulation. Preferably the barrier has a generally tubular configuration having a first tubular end portion positioned about the inner pipe, a second tubular end portion of greater diameter than that of the first end portion positioned about the surface layer, and a radially extending intermediate portion which joins the two end portions, each end portion preferably having a layer of adhesive or sealant on its inner surface for providing a watertight seal. When the pipe is provided with one or more barriers, the cover is positioned over the or at least one barrier.

According to another aspect, the invention provides a pipe that is protected from ingress or escape of fluid through a portion thereof by means of a cover positioned about the said portion of the pipe, at least part of one surface of the cover being provided with a layer of sealant which will adhere to the external surface of the pipe and which, when subjected to a strain in the peel mode applied between the cover and the pipe sufficient to cause the adhesive bond so formed to fail, will fail cohesively at a temperature below -10°C, preferably below -15°C and especially below -20°C.

The seal may be used for protecting any form of pipe from ingress or escape of a fluid, for example for protecting a gas pipe from escape of the gas, or a thermally insulated pipe from ingress of ambient water that would damage its insulation.

Thus the invention also provides an arrangement for protecting a thermally insulated pipe from ingress of water through a portion thereof, which comprises means for preventing or detecting penetration of water along the insulation of the pipe, and a seal as defined above. The means for detecting penetration may for example comprise an arrangement as described in U.K. Patent Application No. 2051294A. The preferred arrangement according to the invention however comprises at least one barrier for preventing penetration of water along the insulation of the pipe, the or each barrier adapted to be positioned between two lengths of insulation of the pipe so that it extends radially from the inner pipe to the external surface of the insulation, and a cover adapted to be positioned about a portion of the insulated pipe so that it extends across the or at least one barrier, at least part of one surface of the cover being provided with a layer of sealant which will adhere to the external surface of the pipe and which, when subjected to a strain in a peel mode applied between the cover and the pipe sufficient to cause the adhesive bond so formed to fail, will fail cohesively at a temperature below -10°C. preferably below -15°C and especially below -20°C.

The barrier is advantageously adapted to be positioned about the inner pipe to form a watertight seal therewith and to extend to the external surface of the insulated pipe (i.e. of the surface layer) so that a further watertight seal can be formed between the barrier and the surface layer. Preferably the barrier has a generally tubular configuration having a first tubular end portion to be positioned about the inner pipe, a second tubular end portion of greater diameter than that of the first end portion to be positioned about the surface layer, and a radially extending intermediate portion which joins the two end portions, each end portion preferably having a layer of adhesive or sealant on its inner surface for providing a watertight seal.

The arrangement may comprise two barriers in which case the cover is preferably adapted to be positioned about the insulated pipe so that it extends across both barriers. Such an arrangement is particularly suitable for protecting an insulated pipe at a join between two lengths thereof. Some forms of pre-insulated pipes, especially those used for district heating purposes are formed in discrete lengths, each length being provided with insulation and a surface layer. At each end of a length of insulated pipe, the inner pipe extends beyond the insulation and surface layer for a short distance, for example about 20 cm, so that two such inner pipes can be welded together. When the pipes have been welded together, the exposed inner pipes need to be insulated and the insulation of the pipe (i.e. the insulation added subsequently and the previously applied insulation) must be protected from contact with water. This may be achieved according to the invention by positioning a barrier about the inner pipe at the end of each length of insulation so that they form a watertight seal where they contact the inner pipe and the surface layer, providing the uninsulated portion of the inner pipes with a layer of insulation, and positioning a cover about the pipe so that it extends across each barrier and forms a seal with the surface layer on the side of each barrier remote from the weld.

Preferably the cover or the or each barrier, if present, is dimensionally recoverable. Dimensionally recoverable articles are articles, the dimensional configuration of which may be made substantially to change when subjected to the appropriate treatment. Of particular interest are heat-recoverable articles, the dimensional configuration of which may be made substantially to change when subjected to heat treatment. Heat-recoverable articles may be produced by deforming an original heat-stable configuration to a dimensionally heat-unstable configuration, in which case the article will assume, or tend to assume, the orignal heat-stable configuration on the application of heat alone.

According to one method of producing a heat-recoverable article, a polymeric material is first extruded or moulded into a desired shape. The polymeric material is then cross-linked or given the properties of a cross-linked material by means of chemical cross-linking initiators or by exposure to high energy radiation, for example a high energy electron beam or atomic pile radiation. The cross-linked polymeric material is heated and deformed and then locked in the deformed condition by quenching or other suitable cooling methods. The deformed material will retain its shape almost indefinitely until exposed to a temperature above its crystalline melting temperature, for example about 120°C in the case of polyethylene. Examples of heat-recoverable articles may be found in US Patent Specification No. 2,027,962 and UK Patent Specification No. 990,235, the disclosures of which are incorporated herein by reference. As is made clear in US Patent No. 2,027,962, however, the original dimensionally heat-stable configuration may be a transient form in a continuous process in which, for example an extruded tube is expanded, whilst hot, to a dimensionally heat unstable form.

Any polymeric material to which the property of dimensional recoverability may be imparted, may be used to form the articles. Preferably the article comprises a polymeric material to which the property of dimensional recoverability has been imparted by crosslinking and deforming the material. Polymers which may be used to form the polymeric material include polyolefins such as polyethylene and ethylene copolymers for example with propylene, butene, vinyl acetate or ethyl acrylate, polyamides, polyurethanes, polyvinylchloride, polyvinylidene flouride, elastomeric materials such as those described in UK Specification No. 1,010,064 and blends such as those disclosed in UK Specifications Nos. 1,284,082 and 1,294,665, the disclosures of which are incorporated herein by reference. The present invention is of particular importance where an article is formed from a polyolefin or a blend of polyolefins, and especially where the polymeric material comprises polyethylene.

The cover may be in any convenient form, for example in the form of a sheet tube or tape. Thus the cover may be a dimensionally heat-recoverable tube having an initial diameter greater than that of the insulated pipe and a recovered diameter less than that of the insulated pipe so that on heating, the tube will conform closely with the contours of the insulated pipe and the sealant will form a watertight seal. Alternatively, the cover may be in the form of a sheet that can be wrapped around the insulated pipe and the end portions thereof be joined together by some appropriate means before being recovered. The means for joining the end portions of the sheet may for example comprise a rail and channel closure system as described in U.K.Patent Specification No. 1,155,470, or it may comprise an adhesive coated patch member that can be placed on the cover so that it overlaps each end portion. An example of such a closure system is described in European Application No. 80302440.5 (which claims priority from U.S. Application No. 58,743). The disclosures of these specifications are incorporated herein by reference.

The cover usually has a thickness of not more than 7mm, preferably not more than 5mm. The sealant may be applied to the cover so that it covers substantially an entire surface thereof or it may be applied only on the end regions of the cover (if it is in the form of a sheet or tape) past a reservoir of the sealant from which sealant is removed to coat the cover and the thickness of the coat is regulated by a doctor blade. Alternatively, the sealant may be extruded as a sheet onto the cover or applied by other methods. The sealant is usually applied to the cover (by whichever method is used) at a temperature from 80 to 100°C.

Since the external surface of the pipe to be protected and/or the cover will often comprise a polyolefin material, the sealant applied to the cover is preferably one that will cause two substrates formed from a polyolefinic material to adhere and which, when subjected to a strain in a peel mode between the substrates sufficient to cause the adhesive bond to fail, will fail cohesively at a temperature below -10°C, preferably below -15°C and especially below -20°C. the surfaces having been treated by lightly abrading them with emery cloth and degreasing or by a similar treatment before application of the sealant.  By the phrases "fail cohesively" or "cohesive failure" used herein is meant failure of the adhesive bond in such a manner that sealant remains on each substrate.  Cohesive failure is due to the fact that the forces causing the sealant to adhere to the substrates are greater than the cohesive forces within the sealant.

Preferably the sealant has a glass transition temperature below -40°C and especially below -50°C.

By using a cover or arrangement according to the present invention for protecting a pipe, for example at a join or a repaired part thereof, it is possible to form a substantially watertight seal against the ingress of water or water vapour into the pipe or, for example in the case of a gas main, to form a seal that will prevent leakage of gaseous contents of the pipe, which seal will not be adversely affected by a fall in the ambient temperature to -10°C or in many cases to -20°C. One problem that occurs occasionally is that pipe seals can be damaged when exposed to low temperatures and may then allow water to enter the pipe insulation or may allow contents of the pipe to escape. It has been found that the damage is caused by the cover and sealant becoming brittle when exposed to such temperatures and allowing cracks to form since they are not able to take up movement in the pipe, for example vibration or thermal expansion and contraction of the pipe. In the present invention, however, it has been found that even at such low temperatures the sealant can deform sufficiently to take up the movement of the pipes.

In addition, where mechanical abuse, extreme temperature drop or vibration does cause a crack in the sealant used in the cover or arrangement according to the invention, the fact that the crack will be associated with cohesive failure of the adhesive bond allows the join between the cover and the surface of the pipe to become resealed, the resealing usually occurring automatically above a temperature of about 0°C. The resealing may occur automatically at temperatures of about -5°C or even -10°C although complete resealing will take longer at these temperatures. In the case of thermally insulated pipes such as district heating pipes, the thermal insulation may also be damaged through water or steam escaping through a faulty weld in the inner pipe, and the provision of a barrier will usually limit the damage to a single length of insulation, that is, to the insulation between two such barriers. Where the preferred arrangement is used in which a barrier is provided for installation on each side of the weld, only the relatively short and easily replaceable insulation surrounding the faulty weld will be damaged. This arrangement has the further advantage that if a serious weld fault in a steam carrying pipe causes a build-up of pressure in the space surrounding the weld, the seal between the cover and the external surface of the pipe will fail in preference to either seal of the barrier, and the water vapour will escape into the atmosphere instead of the remaining pipe insulation.

The sealant will generally be a viscid water resistant macromolecular composition which, like non-newtonian fluids, exhibits both viscous and elastic response to stress and which exhibits, in the sense of ASTM1146, at least second order cohesive blocking (and preferably second order adhesive blocking to metal adherands as well) at a temperature between room temperature and the crystalline melting or glass transition temperature or range of the composition.

The sealant for the cover preferably has a viscosity (measured according to ASTM D 1084 method B) at 160°C of not more than 120 PaS and especially not more than 80 PaS otherwise the sealant may exhibit an undesirable degree of flow if the cover is stored for long periods in warm conditions.   The preferred sealants typically have a viscosity of about 70 PaS at 160°C which aids processability during manufacture of the cover, and gives the sealant good void filling characteristics when the cover is heat-recovered onto the pipe.

One sealant for the cover that is particularly effective comprises (i) a rubbery component, for example butyl rubber, a high molecular weight polyisobutylene, ethylene propylene diene monomer (EPDM) or a nitrile rubber; and (ii) a plasticiser, for example polybutene or a low molecular weight polyisobutylene, together with a tackifier and a crystalline reinforcing agent.   By "high molecular weight polyisobutylene" there is meant polyisobutylene having a viscosity average molecular weight Mv of at least 300,000 and by "low molecular weight polyisobutylene" there is meant polyisobutylene having a viscosity average molecular weight Mv of not more than 100,000.

Preferably the sealant comprises not more than 15% by weight rubbery component and at least 40%, especially at least 45% by weight of plasticiser in order that the viscosity of the sealant is not too high (all percentages by weight given herein are based on the total weight of sealant).   These figures are not however essential limits and will depend to some extent on the quantities of other components present and on the viscosities of the rubbery component and plasticiser used. For example, it is possible for the sealant to include a polyisobutylene having a viscosity average molecular weight Mv between 100,000 and 300,000, in addition to the high and low molecular weight polyisobutylenes, in which case it is desirable for the viscosity average molecular weight Mv of the total polyisobutylene component to be not more than 300,000.

Tackifiers that may be used in the sealant and have a softening point in the range of from 85 to 120°C. Preferred tackifiers include esters of rosin, hydrocarbon tackifiers, e.g. "Escorez" and "Nirez" (trade marks), terpene phenols e.g. "Wingtack" (trade Mark) and polymerised esters, e.g. "Piccofyn", "Piccopale" and "Polypale ester No. 1" (trade marks). The tackifier is usually present in an amount from 10 to 24%, preferably from 15 to 20% by weight.

The crystalline reinforcing agents that may be used include acid terpolymers e.g. terpolymers of ethylene, vinyl acetate and methacrylic acid, waxes and low density polyethylene; preferably acid terpolymers. The quantity of crystalline reinforcing agent in the sealant will usually determine the upper limit for the quantity of plasticiser above which there may be an undesirable degree of cold flow. Preferably the sealant comprises not more than 50% by weight of plasticiser in which case at least 15%, especially from 17 to 25% by weight of crystalline reinforcing agent will be present.

Minor quantities of other additivies may also be present such as fillers, antioxidants, ultraviolet stabilizers and colouring agents.  Preferably the sealant contains carbon black, especially in a quanitity of not more than 3%, more especially not more than 1% by weight.

The sealant may, in principle, be applied onto the cover with the aid of a suitable solvent or dispersant vehicle, although the properties of the sealant will usually make it appropriate to apply the sealant onto the cover from the melt.

Where the barrier is provided with sealant, the sealant on that part of the barrier to be positioned about the outer layer of the pipe may also have the composition described above.  The sealant for the part of the barrier to be positioned about the central pipe must however have a significantly higher viscosity than the sealant of the cover.  Usually the barrier will only be provided with one type of sealant, in which case high viscosity butyl rubber-polyisobutylene sealants for example that sold by Raychem under the trade name S1113 have been found to be suitable.

The present invention will now be described by way of example with reference to the accompanying drawings, in which:

Figure 1   is a side elevation, partly in section, of a join in an insulated pipe which is protected according to the invention; and

Figure 2   is a perspective view of one form of cover according to the invention;

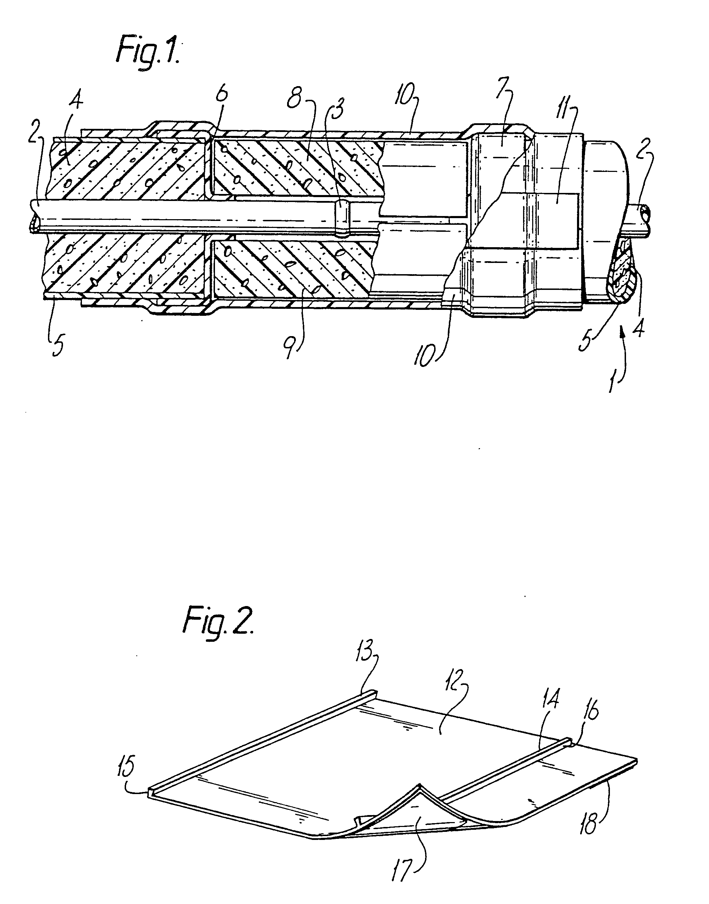

Referring initially to Figure 1 of the accompanying drawings, an insulated district heating pipe 1 comprises a central hollow steel tube 2 for carrying hot water or steam, two lengths of which have been joined by a weld 3, and each length of which is surrounded by a foamed polyurethane insulation 4 and a polyethylene outer layer 5. Each length of central tube 2 extends beyond the insulation 4 and outer sleeve 5 by about 20 cm to allow the lengths of tube to be welded together.

In order to protect the insulation 4 of the pipe 1 from corrosion by water, two barriers 6 and 7 are positioned against, and recovered over, the ends of the pipe insulation, this operation being performed before the lengths of tube 2 have been welded together. Each barrier 6 and 7 has one end of large diameter and another end of smaller diameter and is heat recoverable so that it can be positioned about the tube 2 and the end of the insulation 4 and recovered on the application of heat to form a tight fit about the end of the insulation. In addition, the inner surface of barriers in the region of each end thereof is provided with a layer of adhesive or sealant which will flow during recovery of the barrier, and form a watertight seal.

After the lengths 2 of the tube have been welded together, two half shells 8 and 9 formed from foamed polyurethane are positioned about the exposed central tube so that they extend to the barriers 6 and 7. A heat-recoverable cover 10 in the form of a sheet is then wrapped around the insulated pipe so that it extends across the barriers 6 and 7 and the half shells 8 and 9, and a patch member 11 having an adhesive on one surface thereof is positioned along the opposite edges of the cover to form a hollow tubular cover. The cover is then heated, beginning with the region of the patch, so that it shrinks down onto the insulated tube and conforms closely with the contours thereof. The inner surface of the cover, at least in the region which is intended to contact the outer layers 5 of the pipe, is provided with a sealant which, when the cover is heated, will flow and form a watertight seal. The sealant is also such that if the cover 10 is peeled away from the outer layer sealant will remain on both surfaces, even if the cover is peeled away at a temperature of -20°C.

If the insulated pipe is intended to be buried and has therefore been placed along a trench, the trench may be filled in as soon as the cover has been recovered over the pipe.

Referring to Figure 2, a cover according to the invention for protecting an insulated pipe or a gas main comprises a sheet 12 that is provided with two protuberances 13 and 14 extending along the length thereof, each protuberance having a configuration similar to, or the same as, those described in U.K. Specification No. 1,155,470, so that the sheet can be wrapped around a pipe and the two opposing faces 15 and 16 of the protuberances be brought together so that the protuberances together define a rail over which a channel can be positioned permanently to join the protuberances.

The sheet 12 is formed from a composition based on polyethylene and has been rendered dimensionally heat-recoverable by irradiation with high energy electrons and deformation, for example as described in U.K. Specification No. 990,235, so that, when the sheet is heated it will contract in a direction perpendicular to the protuberances 13 and 14.

The under surface of the sheet 12 is provided at each end thereof with a transversely extending layer of sealant 17 and 18 as described above with respect to Figure 1, so that when the cover is installed around a pipe and heated the sealant will provide a watertight seal between the cover and pipe.

The following Example illustrates the invention.

The following composition was blended using a laboratory Z blade mixer:

|  | Trade name | Parts by weight |
|---|---|---|
| Butyl rubber | - Butyl 065 | 100 |
| Polybutene | - Hyvis 2000 | 400 |
|  | - Hyvis 200 | 100 |
| Tackifier | - Escorez 5380 | 200 |
| Acid terpolymer | - Elvax 4310 | 200 |
| Carbon black |  | 5 |
| Antioxidant | - Irganox 1010 | 10 |

Two sheets of polyethylene 1mm thick lightly abraided and degreased were bonded by means of the resulting sealant composition and the bond was subjected to a rolling drum peel test (as defined in Raychem specification RK4012 issue B section 4.10) at -15°C. A peel strength of about 18 to 20N/25 mm was recorded, and it was observed that a layer of the composition remained on each polyethylene sheet during the peel test.

CLAIMS:

1.   A seal for preventing or reducing ingress or escape of fluid through a portion of a pipe, which comprises a cover adapted to be positioned about the said portion of the pipe, the cover having a surface, at least part of which is provided with a layer of sealant which will adhere to the pipe and which, when subjected to a strain in the peel mode applied between the cover and the pipe sufficient to cause the adhesive bond so formed to fail, will fail cohesively at a temperature below -10°C.

2.   A seal as claimed in claim 1, wherein the sealant has a glass transition temperature below -40°C, preferably below -50°C.

3.   A seal as claimed in claim 1 or claim 2, wherein the sealant has a viscosity at 160°C of not more than 120 PaS, preferably not more than 80 PaS.

4.   A seal as claimed in any one of claims 1 to 3, wherein the sealant comprises:

    (a)   upto 15% be weight of a rubbery component,

    (b)   at least 40% by weight of a plasticiser,

    (c)   a tackifier, and

    (d)   a crystalline reinforcing agent.

5.   A seal as claimed in claim 6, wherein the rubbery component comprises a polyisobutylene having a viscosity average molecular weight Mv of at least 300,000, and the plasticiser comprises a polyisobutylene having a viscosity average molecular weight Mv of up to 100,000.

6.   A seal as claimed in any one of claims 1 to 5, wherein the cover is dimensionally-recoverable.

7.   An arrangement for protecting a thermally insulated pipe, which comprises a cover adapted to be positioned about a portion of the insulated pipe to prevent or reduce ingress or escape of fluid through the said portion, and means for preventing or detecting penetration of water along the insulation of the pipe, the cover having a surface at least part of which is provided with a layer of sealant which will adhere to the pipe and which, when subjected to a strain in the peel mode applied between the cover and the pipe sufficient to cause the adhesive bond so formed to fail, will fail cohesively at a temperature below -10°C.

8.   An arrangment for protecting a portion of a thermally insulated pipe which comprises at least one barrier for preventing penetration of water along the insulation of the pipe, the or each barrier adapted to be positioned between two lengths of insulation of the pipe so that it extends radially from the pipe to the external surface of the insulation, and a cover adapted to be positioned about a portion of the insulated pipe so that it extends across the or at least one barrier, at least part of one surface of the cover being provided with a layer of sealant which will adhere to the external surface of the pipe and which, when subjected to a strain in a peel mode applied between the cover and the pipe sufficient to cause the adhesive bond so formed to fail, will fail cohesively at a temperature below -10°C.

9.   An arrangement as claimed in claim 7 or claim 8, wherein the sealant comprises:

   (a)   up to 15% be weight of a rubbery component,

   (b)   at least 40% by weight of a plasticiser,

   (c)   a tackifier, and

   (d)   a crystalline reinforcing agent.

10. An arrangement as claimed in any one of claims 7 to 9, wherein the cover is dimensionally-recoverable.

11. An arrangement as claimed in claim 8, wherein the or each barrier is dimensionally-recoverable.

12. An arrangement as claimed in claim 11, wherein the or each barrier has a portion that is adapted to be recovered over the external surface of the insulated pipe and is provided with a layer of sealant which will adhere to the external surface of the pipe and which, when subjected to a strain in a peel mode applied between the cover and the pipe sufficient to cause the adhesive bond so formed to fail, will fail cohesively at a temperature below -10°C.

13. A pipe that is protected from ingress or escape of fluid through a portion thereof by means of a cover positioned about the said portion of the pipe, at least part of one surface of the cover being provided with a layer of sealant which adheres to the external surface of the pipe and which, when subjected to a strain in the peel mode applied between the cover and the pipe sufficient to cause the bond so formed to fail, will cohesively at a temperature below -10°C.

*Fig.1.*

*Fig.2.*